# EUROPÄISCHE PATENTSCHRIFT

(11) **EP 2 323 877 B1**
(45) Veröffentlichungstag und Bekanntmachung des Hinweises auf die Patenterteilung: **13.03.2013**
(21) Anmeldenummer: 09780229.2
(22) Anmeldetag: 07.07.2009
(51) Int. Cl.: B60S 1/38, B41M 5/26, B29C 45/00, C08K 3/04

(54) **WISCHBLATT MIT EINEM SPOILER UND EINER ENDKAPPE**
WIPER BLADE HAVING A SPOILER AND AN END CAP
BALAI D'ESSUIE-GLACE AVEC UN DÉFLECTEUR ET UN CAPUCHON D'EXTRÉMITÉ

(30) Priorität: 14.08.2008 DE 102008041261
(43) Veröffentlichungstag der Anmeldung: 25.05.2011
(73) Patentinhaber: Robert Bosch GmbH, 70442 Stuttgart (DE)
(72) Erfinder: Depondt, Helmut, B-3001 Heverlee (BE); Herinckx, Dirk, B-3350 Dries-Linter (BE)
(86) Internationale Anmeldenummer: PCT/EP2009/058568
(87) Internationale Veröffentlichungsnummer: WO 2010/018032

(56) Entgegenhaltungen:
- EP-A- 0 739 933
- WO-A-2009/065647
- DE-A1- 3 639 831
- DE-A1- 10 351 951
- FR-A- 2 194 171
- FR-A- 2 724 895
- FR-A- 2 899 544

## Beschreibung

### Stand der Technik

Die vorliegende Erfindung betrifft einen Spoiler und eine Endkappe für ein Wischblatt, insbesondere für ein Wischblatt zum Wischen einer Kraftfahrzeugscheibe.

Spoiler für Wischblätter zum Wischen von Kraftfahrzeugscheiben werden meist aus vergleichsweise weichen Kunststoffen hergestellt und dienen dazu, einen Anpressdruck auf die Wischblätter im Betrieb zu erzeugen, der diese stärker an zu wischende Kraftfahrzeugscheiben andrückt. Derartige Spoiler werden in der Regel mit geeigneten Endkappen an den Wischblättern fixiert, die aus vergleichsweise härteren Kunststoffen hergestellt werden können, um eine ausreichend stabile Befestigung an den Wischblättern zu gewährleisten.

Um die Wischblätter Hersteller-spezifisch auszugestalten bzw. zu individualisieren ist es wünschenswert, eine Kennzeichnung der Wischblätter, z.B. mit Markenzeichen entsprechender Kraftfahrzeughersteller, zu ermöglichen. Für die Kennzeichnung bieten sich insbesondere die großflächigen Spoiler bzw. Endkappen an.

Die DE 30 44 722 A1 beschreibt ein Verfahren zur Kennzeichnung von Kunststoffteilen, bei dem dem Kunststoff des Grundmaterials ein sich bei Einwirkung von Energiestrahlung verfärbbarer Füllstoff beigemischt wird, wobei als Füllstoff Ruß oder Graphit verwendet wird. Aus dem derart hergestellten Kunststoff-Füllstoff-Gemisch werden mit einem einheitlichen Werkzeug Standardteile gespritzt. Die Oberfläche dieser Standardteile wird einer Energiestrahlung in der Form eines auf die Oberfläche aufzubringenden Zeichens ausgesetzt. Hierdurch verfärbt sich die Oberfläche an einer Auftreffstelle der Energiestrahlung, wobei an der Oberfläche eine Abbildung des aufzubringenden Zeichens entsteht.

Nachteilig am Stand der Technik ist, dass bei obigem Verfahren die Energiestrahlung zunächst in die Tiefe der Kunststoffoberfläche eindringen muss, da ansonsten Teilchen der Oberfläche von der Energiestrahlung abgetragen werden können. Dies erfordert ein umständliches Herstellungsverfahren der mit Ruß oder Graphit gemischten, vergleichsweise harten Kunststoffe, wie beispielsweise der für die Endkappen verwendbaren Kunststoffe, da diese zusätzlich mit einer Pigmentkonzentration eingefärbt werden müssen, die gewährleistet, dass die Energiestrahlung erst in einer vorgegebenen Tiefe absorbiert wird. Darüber hinaus sind die Spoiler für Wischblätter in der Regel wie oben beschrieben aus weichen Kunststoffen, z.B. thermoplastischen Elastomeren, ausgebildet, die an entsprechenden Auftreffstellen einer zugeordneten Energiestrahlung verkohlen würden, ohne hierbei eine gut sichtbare Kennzeichnung zu erzeugen.

### Offenbarung der Erfindung

Eine Aufgabe der Erfindung ist es daher, einen Spoiler und eine Endkappe für ein Wischblatt bereit zu stellen, bei denen eine einfache, dauerhafte und gut erkennbare Kennzeichnung ermöglicht wird, wobei die oben beschriebenen Nachteile des Standes der Technik vermieden werden.

Dieses Problem wird gelöst durch einen Spoiler für ein Wischblatt, insbesondere für ein Wischblatt zum Wischen einer Kraftfahrzeugscheibe, bei dem zumindest in einem vorgegebenen Bereich ein Gummimaterial vorgesehen ist, das dazu ausgebildet ist, sich bei Einwirkung von Energiestrahlung an einer zugeordneten Auftreffstelle der Energiestrahlung zu verfärben.

Die Erfindung ermöglicht somit die Herstellung eines Spoilers aus einem einzelnen Material, das einfach und unkompliziert mit einer geeigneten Energiestrahlung gekennzeichnet werden kann, wobei auf ein Mischen des Materials mit einem Füllstoff zum Ermöglichen einer Kennzeichnung verzichtet werden kann. Insbesondere kann der erfindungsgemäße Spoiler an einer frei wählbaren Stelle bestrahlt und gekennzeichnet werden.

Gemäß einer Ausführungsform weist das Gummimaterial schwarzen Gummi auf, der dazu ausgebildet ist, sich bei Einwirkung der Energiestrahlung an der zugeordneten Auftreffstelle weiß zu färben. Der schwarze Gummi ist bevorzugt aus Ethylen-Propylen-Dien-Kautschuk oder Styrol-Butadien-Kautschuk ausgebildet.

Somit kann der erfindungsgemäße Spoiler mit dauerhaft sichtbaren und klar erkennbaren, kontrastreichen weißen Kennzeichnungen auf schwarzem Grund versehen werden.

Zur Erzeugung der Energiestrahlung ist ein gepulster Laser verwendbar.

Das Eingangs genannte Problem wird auch gelöst durch ein Verfahren zur Kennzeichnung eines Spoilers für ein Wischblatt, insbesondere für ein Wischblatt zum Wischen einer Kraftfahrzeugscheibe. Ein vorgegebener Bereich des Spoilers, in dem der Spoiler ein Gummimaterial aufweist, wird zumindest abschnittsweise einer Energiestrahlung ausgesetzt, wobei sich das Gummimaterial an einer zugeordneten Auftreffstelle der Energiestrahlung verfärbt.

Die Erfindung ermöglicht somit eine einfache und unkomplizierte Kennzeichnung des aus einem einzelnen Gummimaterial hergestellten Spoilers mit einer geeigneten Energiestrahlung, wobei auf ein Mischen des Materials mit einem Füllstoff zum Ermöglichen der Kennzeichnung verzichtet werden kann. Darüber hinaus können zur Kennzeichnung verwendete Motive durch Verwendung der Energiestrahlung schnell und einfach geändert werden.

Gemäß einer Ausführungsform weist das Gummimaterial schwarzen Gummi auf, der sich bei Einwirkung der Energiestrahlung an der zugeordneten Auftreffstelle weiß färbt. Der schwarze Gummi ist bevorzugt aus Ethylen-Propylen-Dien-Kautschuk oder Styrol-Butadien-Kautschuk ausgebildet.

Somit werden kontrastreiche, klar erkennbare und dauerhaft sichtbare weiße Kennzeichnungen des erfindungsgemäßen Spoilers auf schwarzem Grund ermöglicht.

Zur Erzeugung der Energiestrahlung wird vorzugsweise ein gepulster Laser verwendet.

Das Eingangs genannte Problem wird auch gelöst durch eine Endkappe für ein Wischblatt, insbesondere für ein Wischblatt zum Wischen einer Kraftfahrzeugscheibe. Zumindest in einem vorgegebenen Bereich der Endkappe sind Glassfiber vorgesehen, die dazu ausgebildet sind, sich bei Einwirkung von Energiestrahlung an einer zugeordneten Auftreffstelle der Energiestrahlung in dem vorgegebenen Bereich zu verfärben.

Die Erfindung ermöglicht somit die Herstellung von Endkappen aus einem Material, das einfach und unkompliziert mit einer geeigneten Energiestrahlung in dem mit Glassfiber versehenen Bereich gekennzeichnet werden kann, wobei durch Verwendung der Glassfiber auf ein Einfärben des Materials, insbesondere mit einer Pigmentkonzentration wie oben beschrieben, verzichtet werden kann.

Gemäß einer Ausführungsform sind die Glassfiber dazu ausgebildet, sich bei Einwirkung der Energiestrahlung in dem vorgegebenen Bereich an der zugeordneten Auftreffstelle weiß zu färben.

Somit kann die erfindungsgemäße Endkappe mit dauerhaft sichtbaren und klar erkennbaren Kennzeichnungen versehen werden.

Zur Erzeugung der Energiestrahlung ist ein gepulster Laser verwendbar.

Das Eingangs genannte Problem wird auch gelöst durch ein Verfahren zur Kennzeichnung einer Endkappe eines Wischblatts, insbesondere eines Wischblatts zum Wischen einer Kraftfahrzeugscheibe. Ein vorgegebener Bereich der Endkappe, in dem Glassfiber vorgesehen sind, wird zumindest abschnittsweise einer Energiestrahlung ausgesetzt, wobei sich die Glassfiber an einer zugeordneten Auftreffstelle der Energiestrahlung verfärben.

Die Erfindung ermöglicht somit eine einfache und unkomplizierte Kennzeichnung der Endkappe mit einer geeigneten Energiestrahlung, wobei durch Verwendung der Glassfiber auf ein Einfärben des Materials, insbesondere mit einer Pigmentkonzentration wie oben beschrieben, verzichtet werden kann.

Die Glassfiber färben sich bei Einwirkung der Energiestrahlung in dem vorgegebenen Bereich an der zugeordneten Auftreffstelle bevorzugt weiß.

Somit werden klar erkennbare und dauerhaft sichtbare Kennzeichnungen der erfindungsgemäßen Endkappe ermöglicht.

Zur Erzeugung der Energiestrahlung wird bevorzugt ein gepulster Laser verwendet.

Das Eingangs genannte Problem wird auch gelöst durch ein Wischblatt, insbesondere zum Wischen einer Kraftfahrzeugscheibe, das einen oben beschriebenen Spoiler und/oder mindestens eine oben beschriebene Endkappe aufweist.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
Fig. 1 eine perspektivische Ansicht einer ersten Ausführungsform eines Wischblatts bei einem Verfahren zur Kennzeichnung gemäß der Erfindung,
Fig. 2 eine Seitenansicht des Wischblatts von Fig. 1 in einer Betriebsposition,
Fig. 3 eine Seitenansicht eines ersten Ausschnitts des Wischblatts von Fig. 2,
Fig. 4 eine Seitenansicht eines zweiten Ausschnitts des Wischblatts von Fig. 2,
Fig. 5 eine perspektivische Ansicht eines Endes des Wischblatts von Fig. 1 ohne Endkappe,
Fig. 6 eine perspektivische Ansicht des Wischblattendes von Fig. 5 mit Endkappe, aus einem geänderten Betrachtungswinkel, und
Fig. 7 einen Querschnitt entsprechend der Linie VII-VII in Fig. 5.

### Beschreibung der Ausführungsbeispiele

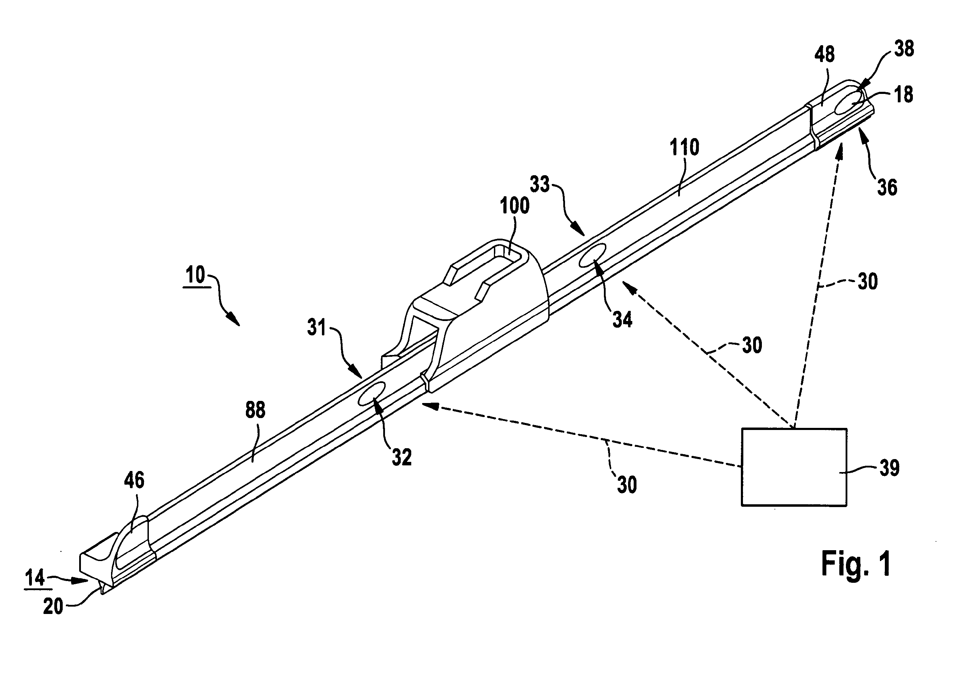

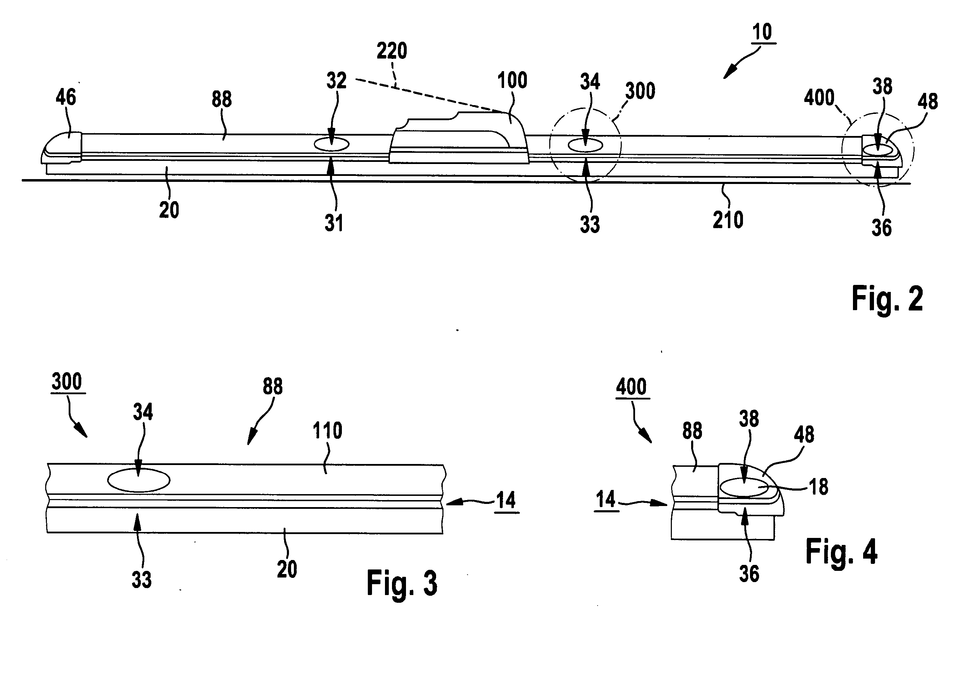

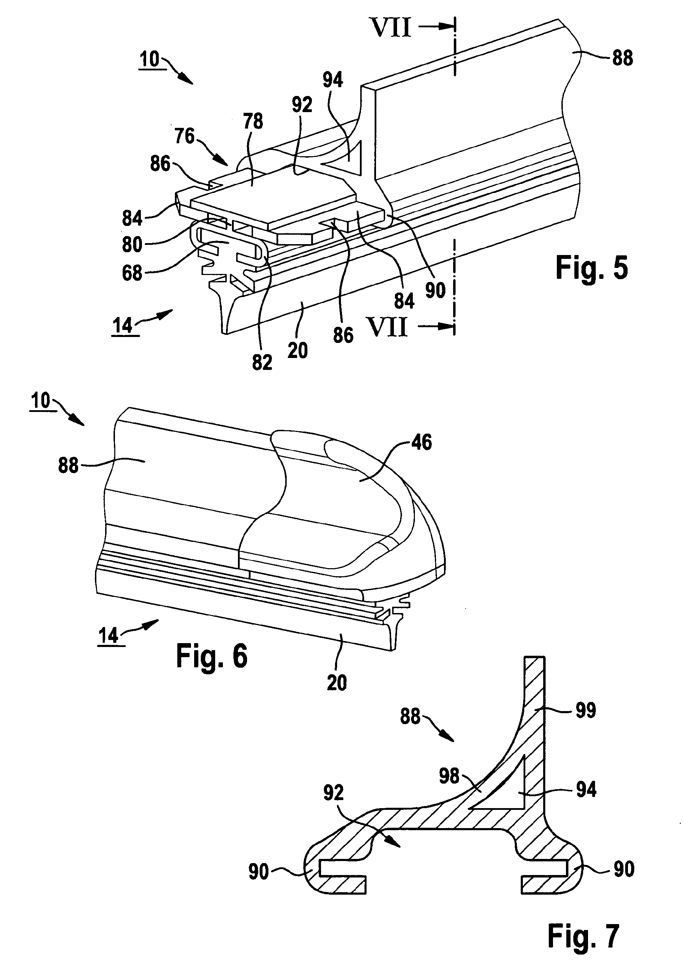

Fig. 1 zeigt ein Wischblatt 10 für einen Scheibenwischer, insbesondere zum Reinigen einer Kraftfahrzeugscheibe (210 in Fig. 2). Zur Fixierung an einem entsprechenden Wischerarm (220 in Fig. 2) ist an dem Wischblatt 10 eine Halterung 100 befestigt. Das Wischblatt 10 weist einen Spoiler 88, zwei Endkappen 46, 48 und eine Wischleiste 14 mit mindestens einer Wischlippe 20 auf, die wie bei den Fig. 5 und 6 beschrieben miteinander verbunden sind.

Gemäß einer Ausführungsform ist der Spoiler 88 zumindest in einem vorgegebenen Bereich 31, 33, und bevorzugt vollständig, aus einem Gummimaterial 110 hergestellt, das dazu ausgebildet ist, sich bei Einwirkung von Energiestrahlung 30 an einer zugeordneten Auftreffstelle 32, 34 der Energiestrahlung 30 zu verfärben. Das Gummimaterial 110 besteht vorzugsweise aus schwarzem Gummi, der dazu ausgebildet ist, sich bei Einwirkung der Energiestrahlung 30 an der zugeordneten Auftreffstelle 32, 34 weiß zu färben. Der schwarze Gummi ist bevorzugt aus Ethylen-Propylen-Dien-Kautschuk (EPDM) oder Styrol-Butadien-Kautschuk (SBR) ausgebildet.

Zumindest eine der Endkappen 46, 48, im dargestellten Ausführungsbeispiel die Endkappe 48, ist aus einem Kunststoff hergestellt, der mindestens in einem vorgegebenen Bereich 36 Glassfiber 18 aufweist. Diese sind vorzugsweise dazu ausgebildet, sich bei Einwirkung der Energiestrahlung 30 an einer zugeordneten Auftreffstelle 38 der Energiestrahlung 30 in dem vorgegebenen Bereich 36 weiß zu färben.

Gemäß einer Ausführungsform wird zur Erzeugung der Energiestrahlung 30 ein gepulster Laser 39 verwendet. Dieser strahlt Laserstrahlen aus, die dazu geeignet sind, in den vorgegebenen Bereichen 31, 33, 36 wie in Fig. 1 gezeigt eine gewünschte Kennzeichnung zu erzeugen. Diese Laserstrahlen 30 bewirken an den zugeordneten Auftreffstellen 32, 34 in den Bereichen 31, 33 bevorzugt ein Aufschäumen des Gummimaterials 110 in der Form der gewünschten Kennzeichnung. Hierbei entsteht vorzugsweise eine weiße Kennzeichnung auf schwarzem Grund, der von dem schwarzen Gummi des Gummimaterials 110 gebildet wird. An der zugeordneten Auftreffstelle 38 im Bereich 36 der Endkappe 48 bewirken die Laserstrahlen 30 bevorzugt eine strahlungsbedingte Verfärbung der Glassfiber 18 in der Form der gewünschten Kennzeichnung. Hierbei entsteht ebenfalls vorzugsweise eine weiße Kennzeichnung auf schwarzem Grund, der von dem bevorzugt schwarzen Kunststoff der Endkappe 48 gebildet wird.

Fig. 2 zeigt das an einem strichpunktiert angedeuteten Wischerarm 220 befestigte Wischblatt 10, das in einer Betriebsposition über einer vereinfacht eben dargestellten Kraftfahrzeugscheibe 210 abgebildet ist. Fig. 3 zeigt einen vergrößerten Ausschnitt 300 von Fig. 2, der die an der Auftreffstelle 34 der Laserstrahlung 30 von Fig. 1 im Bereich 33 des Spoilers 88 durch Aufschäumen des Gummimaterials 110 erzeugte Kennzeichnung verdeutlicht. Fig. 4 zeigt einen vergrößerten Ausschnitt 400 von Fig. 2, der die an der Auftreffstelle 38 der Laserstrahlung 30 von Fig. 1 im Bereich 36 der Endkappe 48 durch Verfärbung der Glassfiber 18 erzeugte Kennzeichnung verdeutlicht.

Fig. 5 zeigt das Wischblatt 10 von Fig. 1 mit einem Träger 76, der z.B. aus einem vergleichsweise härteren Kunststoff ausgebildet ist und eine Rückenleiste 78 aufweist, die über einen Steg 80 mit Halteschienen 82 verbunden ist. Diese liegen einander gegenüber und bilden einen Längsspalt sowie einen im Querschnitt annähernd rechteckigen Zwischenraum zur Aufnahme einer Rückenleiste 68 der Wischleiste 14. Zwischen der Rückenleiste 78 des Trägers 76 einerseits und den Halteschienen 82 andererseits befinden sich seitlich offene Längsnuten, in die Federschienen 84 eingesetzt sind. Diese stehen seitlich ein Stück weit aus den Nuten vor, sodass der Spoiler 88 mit Längsführungen 90 auf die vorstehenden Teile der Federschienen 84 geschoben oder geklippst werden kann.

Der Spoiler 88 besitzt einen Längskanal 94 und eine Ausbuchtung 92 zwischen den Längsführungen 90 für die Rückenleiste 78 des Trägers 76. Der Träger 76 und die Wischleiste 14 stehen in Längsrichtung ein Stück weit über die Stirnseite des Spoilers 88 vor. Im vorstehenden Bereich weisen die Federschienen 84 Aussparungen 86 auf, die im dargestellten Ausführungsbeispiel zum Fixieren der Endkappe 46 dienen.

Fig. 6 verdeutlicht die an dem Wischblatt 10 befestigte Endkappe 46.

Fig. 7 zeigt den Spoiler 88 mit dem Längskanal 94 und der Ausbuchtung 92. Darüber hinaus verdeutlicht Fig. 7 die Längsführungen 90 des Spoilers 88, mit denen dieser auf die vorstehenden Teile der Federschienen 84 des Wischblatts 10 von Fig. 5 geschoben oder geklippst werden kann.

## Patentansprüche

1. Spoiler (88) für ein Wischblatt (10), insbesondere für ein Wischblatt (10) zum Wischen einer Kraftfahrzeugscheibe (210), **dadurch gekennzeichnet, dass** zumindest in einem vorgegebenen Bereich (31, 33) ein Gummimaterial (110) vorgesehen ist, das dazu ausgebildet ist, sich bei Einwirkung von Energiestrahlung (30) an einer zugeordneten Auftreffstelle (32, 34) der Energiestrahlung (30) zur dauerhaften Kennzeichnung des Spoilers (88) zu verfärben.

2. Spoiler (88) nach Anspruch 1, **dadurch gekennzeichnet, dass** das Gummimaterial (110) schwarzen Gummi aufweist, der dazu ausgebildet ist, sich bei Einwirkung der Energiestrahlung (30) an der zugeordneten Auftreffstelle (32, 34) weiß zu färben.

3. Spoiler (88) nach Anspruch 1 oder 2, **dadurch gekennzeichnet, dass** der schwarze Gummi aus Ethylen-Propylen-Dien-Kautschuk oder Styrol-Butadien-Kautschuk ausgebildet ist.

4. Spoiler (88) nach einem der vorhergehenden Ansprüche, **dadurch gekennzeichnet, dass** zur Erzeugung der Energiestrahlung (30) ein gepulster Laser (39) verwendbar ist.

5. Verfahren zur Kennzeichnung eines Spoilers (88) für ein Wischblatt (10), insbesondere für ein Wischblatt (10) zum Wischen einer Kraftfahrzeugscheibe (210), **dadurch gekennzeichnet, dass** ein vorgegebener Bereich (32, 34) des Spoilers (88), in dem der Spoiler (88) ein Gummimaterial (110) aufweist, zumindest abschnittsweise einer Energiestrahlung (30) ausgesetzt wird, wobei sich das Gummimaterial (110) an einer zugeordneten Auftreffstelle (32, 34) der Energiestrahlung (30) zur dauerhaften Kennzeichnung des Spoilers (88) verfärbt.

6. Verfahren nach Anspruch 5, **dadurch gekennzeichnet, dass** das Gummimaterial (110) schwarzen Gummi aufweist, der sich bei Einwirkung der Energiestrahlung (30) an der zugeordneten Auftreffstelle (32, 34) weiß färbt.

7. Verfahren nach Anspruch 5 oder 6, **dadurch gekennzeichnet, dass** der schwarze Gummi aus Ethylen-Propylen-Dien-Kautschuk oder Styrol-Butadien-Kautschuk ausgebildet ist.

8. Verfahren nach einem der Ansprüche 5 bis 7, **dadurch gekennzeichnet, dass** zur Erzeugung der Energiestrahlung (30) ein gepulster Laser (39) verwendet wird.

9. Endkappe (46) für ein Wischblatt (10), insbesondere für ein Wischblatt (10) zum Wischen einer Kraftfahrzeugscheibe (210), **dadurch gekennzeichnet, dass** zumindest in einem vorgegebenen Bereich (36) der Endkappe (46) Glassfiber (18) vorgesehen sind, die dazu ausgebildet sind, sich bei Einwirkung von Energiestrahlung (30) an einer zugeordneten Auftreffstelle (38) der Energiestrahlung (30) in dem vorgegebenen Bereich (36) zur dauerhaften Kennzeichnung der Endkappe (46) zu verfärben.

10. Endkappe (46) nach Anspruch 9, **dadurch gekennzeichnet, dass** die Glassfiber (18) dazu ausgebildet sind, sich bei Einwirkung der Energiestrahlung (30) in dem vorgegebenen Bereich (36) an der zugeordneten Auftreffstelle (38) weiß zu färben.

11. Endkappe (46) nach Anspruch 9 oder 10, **dadurch gekennzeichnet, dass** zur Erzeugung der Energiestrahlung (30) ein gepulster Laser (39) verwendbar ist.

12. Verfahren zur Kennzeichnung einer Endkappe (46) eines Wischblatts (10), insbesondere eines Wischblatts (10) zum Wischen einer Kraftfahrzeugscheibe (210), **dadurch gekennzeichnet, dass** ein vorgegebener Bereich (36) der Endkappe (46), in dem Glassfiber (18) vorgesehen sind, zumindest abschnittsweise einer Energiestrahlung (30) ausgesetzt wird, wobei sich die Glassfiber (18) an einer zugeordneten Auftreffstelle (38) der Energiestrahlung (30) zur dauerhaften Kennzeichnung der Endkappe (46) verfärben.

13. Verfahren nach Anspruch 12, **dadurch gekennzeichnet, dass** die Glassfiber (18) sich bei Einwirkung der Energiestrahlung (30) in dem vorgegebenen Bereich (36) an der zugeordneten Auftreffstelle (38) weiß färben.

14. Verfahren nach Anspruch 12 oder 13, **dadurch gekennzeichnet, dass** zur Erzeugung der Energiestrahlung (30) ein gepulster Laser (39) verwendet wird.

15. Wischblatt (10), insbesondere zum Wischen einer Kraftfahrzeugscheibe (210), mit einem Spoiler (88) und/oder mindestens einer Endkappe (48) nach einem der vorhergehenden Ansprüche.

## Claims

1. Spoiler (88) for a wiper blade (10), in particular for a wiper blade (10) for wiping a motor vehicle window (210), **characterized in that** a rubber material (110) is provided at least in a predetermined region (31, 33), said rubber material being designed to become coloured, for permanent marking of the spoiler (88), upon action of energy radiation (30) at an assigned impingement point (32, 34) of the energy radiation (30).

2. Spoiler (88) according to Claim 1, **characterized in that** the rubber material (110) comprises black rubber which is designed to become white in colour upon action of the energy radiation (30) at the assigned impingement point (32, 34).

3. Spoiler (88) according to Claim 1 or 2, **characterized in that** the black rubber is formed from ethylene-propylene-diene rubber or styrene-butadiene rubber.

4. Spoiler (88) according to one of the preceding claims, **characterized in that** a pulsed laser (39) is usable for generating the energy radiation (30).

5. Method for marking a spoiler (88) for a wiper blade (10), in particular for a wiper blade (10) for wiping a motor vehicle window (210), **characterized in that** a predetermined region (32, 34) of the spoiler (88), in which region the spoiler (88) comprises a rubber material (110), is at least partially exposed to energy radiation (30), wherein the rubber material (110) becomes coloured, for permanent marking of the spoiler (88), at an assigned impingement point (32, 34) of the energy radiation (30).

6. Method according to Claim 5, **characterized in that** the rubber material (110) comprises black rubber which becomes white in colour upon action of the energy radiation (30) at the assigned impingement point (32, 34).

7. Method according to Claim 5 or 6, **characterized in that** the black rubber is formed from ethylene-propylene-diene rubber or styrene-butadiene rubber.

8. Method according to one of Claims 5 to 7, **characterized in that** a pulsed laser (39) is used for generating the energy radiation (30).

9. End cap (46) for a wiper blade (10), in particular for a wiper blade (10) for wiping a motor vehicle window (210), **characterized in that** glass fibres (18) are provided at least in a predetermined region (36) of the end cap (46), said glass fibres being designed to become coloured, for permanent marking of the end cap (46), upon action of energy radiation (30) at an assigned impingement point (38) of the energy radiation (30) in the predetermined region (36).

10. End cap (46) according to Claim 9, **characterized in that** the glass fibres (18) are designed to become white in colour upon action of the energy radiation (30) in the predetermined region (36) at the assigned impingement point (38).

11. End cap (46) according to Claim 9 or 10, **characterized in that** a pulsed laser (39) is usable for generating the energy radiation (30).

12. Method for marking an end cap (46) of a wiper blade (10), in particular a wiper blade (10) for wiping a motor vehicle window (210), **characterized in that** a predetermined region (36) of the end cap (46), in which region glass fibres (18) are provided, is at least partially exposed to energy radiation (30), wherein the glass fibres (18) become coloured, for permanent marking of the end cap (46), at an assigned impingement point (38) of the energy radiation (30).

13. Method according to Claim 12, **characterized in that** the glass fibres (18) become white in colour upon action of the energy radiation (30) in the predetermined region (36) at the assigned impingement point (38).

14. Method according to Claim 12 or 13, **characterized in that** a pulsed laser (39) is used for generating the energy radiation (30).

15. Wiper blade (10), in particular for wiping a motor vehicle window (210), with a spoiler (88) and/or at least one end cap (48) according to one of the preceding claims.

## Revendications

1. Béquet (88) pour balai d'essuie-glace (10), en particulier pour balai d'essuie-glace (10) destiné à essuyer une vitre (210) de véhicule automobile, **caractérisé en ce que**
au moins dans une partie (31, 33) prédéterminée, un matériau caoutchouteux (110) est prévu et est configuré pour se colorer sous l'action du rayonnement d'énergie (30) en un emplacement associé d'incidence (32, 34) du rayonnement d'énergie (30) pour caractériser durablement le béquet (88).

2. Béquet (88) selon la revendication 1, **caractérisé en ce que** le matériau caoutchouteux (110) présente un caoutchouc noir configuré pour se colorer en blanc sous l'action du rayonnement d'énergie (30) en l'emplacement d'incidence (32, 34) associé.

3. Béquet (88) selon les revendications 1 ou 2, **caractérisé en ce que** le caoutchouc noir est formé d'un caoutchouc d'éthylène-propylène-diène ou d'un caoutchouc de styrène-butadiène.

4. Béquet (88) selon l'une des revendications précédentes, **caractérisé en ce qu'**un laser pulsé (39) peut être utilisé pour former le rayonnement d'énergie (30).

5. Procédé de caractérisation d'un béquet (88) de balai d'essuie-glace (10), en particulier de balai d'essuie-glace (10) destiné à essuyer une vitre (210) d'un véhicule automobile,
**caractérisé en ce que**
une partie prédéterminée (32, 34) du béquet (88), dans laquelle le béquet (88) présente un matériau caoutchouteux (110), est exposée au moins en partie à un rayonnement d'énergie (30) et
**en ce que** le matériau de caoutchouc (110) se colore en un emplacement d'incidence (32, 34) associé au rayonnement d'énergie (30) en vue de caractériser durablement le béquet (88).

6. Procédé selon la revendication 5, **caractérisé en ce que** le matériau de caoutchouc (110) présente un caoutchouc noir qui se colore en blanc sous l'action du rayonnement d'énergie (30) en l'emplacement d'incidence (32, 34) associé.

7. Procédé selon les revendications 5 ou 6, **caractérisé en ce que** le caoutchouc noir est formé d'un caoutchouc d'éthylène-propylène-diène ou d'un caoutchouc de styrène-butadiène.

8. Procédé selon les revendications 5 à 7, **caractérisé en ce qu'**un laser pulsé (39) peut être utilisé pour former le rayonnement d'énergie (30).

9. Capuchon d'extrémité (46) pour balai d'essuie-glace (10), en particulier pour balai d'essuie-glace (10) destiné à essuyer une vitre (210) d'un véhicule automobile,
**caractérisé en ce que**
des fibres de verre (18) configurées pour se colorer sous l'action du rayonnement d'énergie (30) en un emplacement associé d'incidence (38) du rayonnement d'énergie (30) pour caractériser durablement le capuchon d'extrémité (46) sont prévues au moins dans une partie prédéterminée (36) du capuchon d'extrémité (46).

10. Capuchon d'extrémité (46) selon la revendication 9, **caractérisé en ce que** les fibres de verre (18) sont configurées pour se colorer en blanc sous l'action du rayonnement d'énergie (30) dans la partie prédéterminée (36), à l'emplacement d'incidence (38) associé.

11. Capuchon d'extrémité (46) selon les revendications 9 ou 10, **caractérisé en ce qu'**un laser pulsé (39) peut être utilisé pour former le rayonnement d'énergie (30).

12. Procédé de caractérisation d'un capuchon d'extrémité (46) d'un balai d'essuie-glace (10), en particulier d'un balai d'essuie-glace (10) servant à essuyer une vitre (210) d'un véhicule automobile, **caractérisé en ce que**
une partie prédéterminée (36) du capuchon d'extrémité (46), dans laquelle des fibres de verre (18) sont prévues, est exposée au moins en partie à un rayonnement d'énergie (30), les fibres de verre (18) se colorant en un emplacement d'incidence (38) associé au rayonnement d'énergie (30) en vue de caractériser durablement le capuchon d'extrémité (46).

13. Procédé selon la revendication 12, **caractérisé en ce que** sous l'action du rayonnement d'énergie (30), les fibres de verre (18) se colorent en blanc dans la partie prédéterminée (36) en l'emplacement d'incidence (38) associé.

14. Procédé selon les revendications 12 ou 13, **caractérisé en ce qu'**un laser pulsé (39) peut être utilisé pour former le rayonnement d'énergie (30).

15. Balai d'essuie-glace (10), en particulier destiné à essuyer une vitre (210) de véhicule automobile, et doté d'un béquet (88) et/ou d'au moins un capuchon d'extrémité (48) selon l'une des revendications précédentes.
